## Europäisches Patentamt

## European Patent Office

## Office européen des brevets

(11) Numéro de publication: **0 147 297**

**B1**

(12)

# FASCICULE DE BREVET EUROPÉEN

(45) Date de publication du fascicule du brevet:
**23.11.88**

(21) Numéro de dépôt: **84402620.3**

(22) Date de dépôt: **18.12.84**

(51) Int. Cl.⁴: **D 04 H 18/00,** B 29 C 53/80

(54) Procédé et appareillage pour la fabrication de structures tridimensionnelles de révolution.

(30) Priorité: **28.12.83 FR 8320948**

(43) Date de publication de la demande:
**03.07.85 Bulletin 85/27**

(45) Mention de la délivrance du brevet:
**23.11.88 Bulletin 88/47**

(84) Etats contractants désignés:
**BE CH DE GB IT LI SE**

(56) Documents cité:
**DE-A-2 434 242**
**FR-A-1 570 992**
**GB-A-2 048 424**
**GB-A-2 099 365**

(73) Titulaire: **SOCIETE EUROPEENNE DE
PROPULSION (S.E.P.) Société Anonyme dite:, 24
Rue Salomon de Rothschild, F-92150 Suresnes
(FR)**

(72) Inventeur: **Olry, Pierre Raymond, 27, rue Edmond
Costedoat, F-33000 Bordeaux (FR)**

(74) Mandataire: **Joly, Jean- Jacques, CABINET BEAU
DE LOMENIE 55, rue d'Amsterdam, F-75008 Paris
(FR)**

EP 0 147 297 B1

## Description

La présente invention concerne la fabrication de structures tridimensionnelles de révolution, et plus précisément de structures formées par des couches superposées de matériau fibreux liées entre elles.

Une application particulière, mais non limitative, de l'invention est la réalisation de structures de renfort tridimensionnelles destinées à la fabrication de pièces en matériau composite, notamment pour des divergents de tuyère.

Une technique connue pour réaliser des structures tridimensionnelles de révolution en vue d'une telle application consiste à superposer plusieurs couches d'un matériau fibreux bidimensionnel (feutre ou tissu par exemple) sur un mandrin cylindrique, puis à lier les couches entre elles au moyen de fils traversant l'empilement sur toute son épaisseur. Cette technique n'est pas toujours facile à mettre en oeuvre de façon automatique, notamment lorsque l'epaisseur de l'empilement est importante. De plus, dans le cas de structures tridimensionnelles en vue de la fabrication de divergents de tuyère, la forme tronconique ou en "coquetier" du produit final désiré impose une opération d'usinage de la structure cylindrique et entraîne des pertes de matière.

Pour d'autres applications, il est connu de réaliser une structure tridimensionnelle de révolution par bobinage et aiguilletage d'une bande de matériau fibreux sur un mandrin rotatif. Ainsi, un procédé de fabrication de tube est décrit dans le document GB-A-2 048 424, procédé selon lequel une bande est bobinée sur le mandrin rotatif avec recouvrement partiel des spires voisines, et est liée aux spires précédentes par aiguilletage tandis que la structure tubulaire est extraite en continu du mandrin en direction longitudinale. Un procédé similaire est décrit dans le document DE-A-2 434 242. Ces procédés connus visent uniquement la fabrication de produits cylindriques minces. Quant au document GB-A-2 099 365, il décrit un procédé de fabrication d'une structure cylindrique fibreuse destinée à constituer le renfort d'un matériau composite carbone-carbone utilisable pour réaliser des disques de frein, procédé consistant à enrouler sur un mandrin une bande de matériau en couches superposées qui sont aiguilletées. L'épaisseur du produit obtenu peut être supérieure à celle des tubes réalisés par les procédés connus évoqués ci-avant, mais le procédé reste limité à la fabrication de produits cylindriques.

L'invention a pour objet de fournir un procédé de fabrication de structures tridimensionnelles de révolution qui puisse être mis en oeuvre simplement et automatiquement quelle que soit l'épaisseur de la structure à réaliser.

L'invention a aussi pour objet de fournir un procédé qui permette de réaliser de façon rapide et automatique des structures de révolution non cylindriques, en particulier des structures tronconiques ou à profil "coquetier", et plus généralement des structures à surface non développable.

Conformément à l'invention, le procédé comporte les étapes qui consistent à:

- amener sur un mandrin rotatif non cylindrique, ayant le profil de la structure à fabriquer, une bande de matériau fibreux dont la largeur est plusieurs fois inférieure à la longueur d'une génératrice de la structure à fabriquer,

- bobiner la bande sur le mandrin pour former des couches superposées, chacune constituée par des spires successives de la bande de matériau fibreux, et,

- au cours du bobinage, lier successivement les couches entre elles par un aiguilletage réalisé à l'emplacement où la bande vient se superposer au mandrin ou à la couche précédemment formée, ledit aiguilletage étant réalisé sur toute la largeur de la bande au moyen d'un ensemble d'aiguilles qui est déplacé longitudinalement par rapport au mandrin à une vitesse fonction de la vitesse de rotation du mandrin.

De préférence, la profondeur et la densité surfacique d'aiguilletage sont constantes pour donner une tenue radiale uniforme à la structure. Avantageusement, à cet effet, après bobinage de chaque couche, la distance entre l'ensemble d'aiguilles et la structure en cours de formation est augmentée d'une quantité égale à l'épaisseur d'une couche aiguilletée.

De préférence encore, l'ensemble d'aiguilles est déplacé longitudinalement par rapport au mandrin le long de la surface du mandrin ou de la structure en cours de fabrication.

L'invention a encore pour but de fournir un appareillage destiné à mettre en oeuvre le procédé défini plus haut.

Ce but est atteint au moyen d'un appareillage comportant un mandrin ayant une longueur au moins égale à celle de la structure à fabriquer et un ensemble d'aiguilles s'étendant sur une longueur égale à la largeur de la bande et monté de manière que les aiguilles puissent pénétrer sensiblement perpendiculairement à la bande à l'emplacement où celle-ci vient se superposer au mandrin ou à la couche précédemment formée, ledit appareillage comportant, conformément à l'invention:

- un mandrin rotatif non cylindrique ayant le profil de la structure à fabriquer,

- un dispositif d'alimentation destiné à amener sur le mandrin rotatif une bande de matériau fibreux dont la largeur est plusieurs fois inférieure à la longueur d'une génératrice de la structure à fabriquer, de manière à former sur le mandrin des couches superposées, chacune constituée par des spires successives de la bande de matériau fibreux, et

- un dispositif pour déplacer l'ensemble d'aiguilles longitudinalement par rapport au mandrin à une vitesse fonction de la vitesse de rotation du mandrin.

Avantageusement, des moyens sont prévus pour écarter l'un de l'autre l'ensemble d'aiguilles et le mandrin d'une distance égale à l'épaisseur d'une couche aiguilletée, après la formation de chaque couche. De la sorte, on maintient une profondeur d'aiguilletage constante. En maintenant par ailleurs constantes la vitesse d'alimentation de la bande et la fréquence d'actionnement des aiguilles, une densité volumique d'aiguilletage constante est obtenue.

De préférence, les aiguilles sont montées sur un support qui est mobile longitudinalement le long d'une ligne reproduisant une génératrice du mandrin ou de la structure à fabriquer et qui est couplé à un dispositif d'entraînement destiné à déplacer le support d'aiguilles le long de ce trajet à une vitesse fonction de la vitesse de rotation du mandrin.

D'autres particularités et avantages de la présente invention ressortiront à la lecture de la description faite ci-après à titre indicatif, mais non limitatif, en référence aux dessins annexés sur lesquels:

- la figure 1 est une vue très schématique en élévation d'un mode de réalisation d'un appareillage selon l'invention;

- la figure 2 est une vue très schématique partielle montrant le dispositif d'alimentation de bande;

- la figure 3 est une vue en coupe du mandrin suivant le plan III - III de la figure 1; et,

- la figure 4 est une vue très schématique partielle en élévation d'une variante de réalisation de l'appareillage de la figure 1.

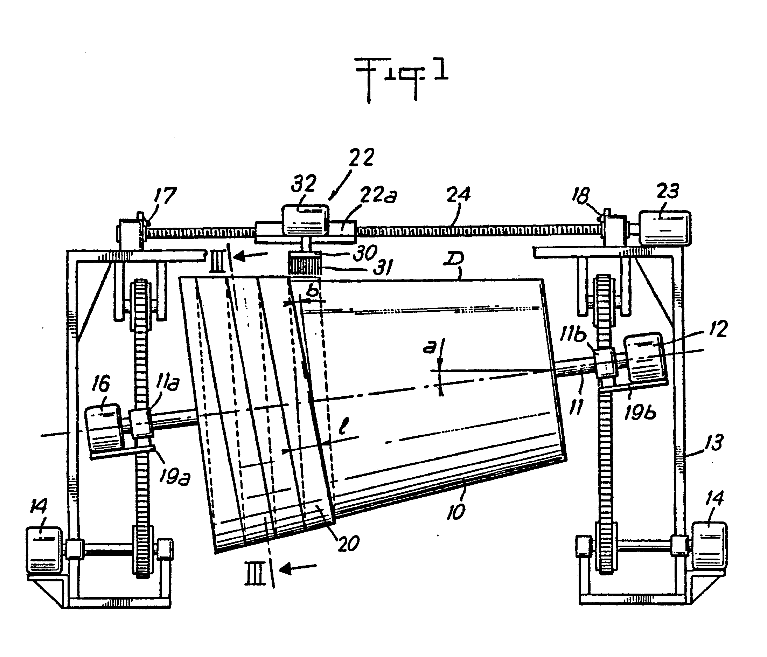

Sur les figures 1 à 3, on a représenté très schématiquement un appareillage destiné à la mise en oeuvre du procédé selon l'invention pour la fabrication d'une structure tridimensionnelle tronconique à section transversale annulaire.

Un mandrin 10 en forme de tronc de cône est mobile en rotation autour de son axe 11 sous l'action d'un moteur 12 à courant continu. Le mandrin est supporté par un bâti 13, l'inclinaison de l'axe du mandrin par rapport à l'horizontale étant réglable pour être rendue égale au demi-angle au sommet $a$ du tronc de cône de la structure à fabriquer. De la sorte, la génératrice supérieure du mandrin s'étend horizontalement.

Une bande 20 de matériau fibreux est tirée d'une réserve (non représentée) au moyen d'un dispositif d'alimentation amenant la bande sur le mandrin à vitesse constante. La bande 20 vient tangentiellement au contact du mandrin 10 (ou d'une couche précédemment formée sur celui-ci) au niveau de la génératrice supérieure horizontale du mandrin (ou de la structure en cours de formation).

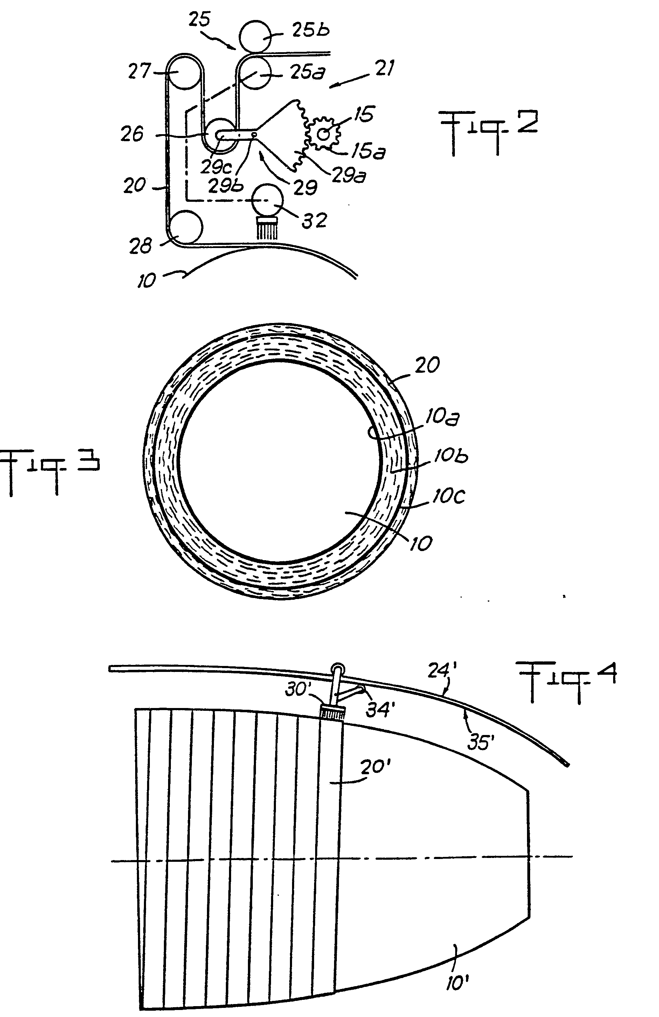

Le dispositif d'alimentation 21 (uniquement représenté sur la figure 2) est monté sur un chariot 22 mobile horizontalement sous l'action d'un moteur 23 le long d'un trajet parallèle à la génératrice supérieure du mandrin. Dans l'exemple illustré, le moteur 23 entraîne en rotation une vis 24 en prise avec un bloc 22a solidaire du chariot 22, le moteur 23 et la vis 24 étant supportés par le bâti 13.

Dans le dispositif d'alimentation, la bande 20 passe successivement à travers une presse d'appel 25 formée par une paire de rouleaux 25a, 25b dont l'un est entraîné en rotation à une vitesse qui détermine la vitesse d'alimentation Va de la bande. La bande 20 passe ensuite sous un rouleau de tension 26 qui peut se déplacer librement en direction verticale et sur deux rouleaux de renvoi 27, 28. Sur la figure 2, le chariot 22 n'est pas représenté.

Une planche à aiguilles 30 est montée sur le chariot 22. La planche 30 comprend une ou plusieurs rangées parallèles d'aiguilles 31 qui s'étendent sur une longueur égale à la largeur $l$ de la bande 20. Cette planche 30 est disposée au niveau où la bande 20 vient se superposer au mandrin 10 ou à une couche précédemment bobinée sur celui-ci. Un mécanisme d'entraînement agit classiquement sur la planche à aiguilles 30 pour déplacer celle-ci verticalement suivant un mouvement de va-et-vient à travers la bande 20. Ce mécanisme d'entraînement comprend un moteur de commande de frappe 32 dont la vitesse de rotation détermine la fréquence d'aiguilletage, c'est-à-dire le nombre N de coups d'aiguilletage par unité de temps. Ce moteur entraîne par exemple un système bielle excentrique qui agit sur la planche à aiguilles 30 et qui détermine la profondeur d'aiguilletage.

On a envisagé ci-avant le cas où la bande vient horizontalement au contact de la génératrice supérieure du mandrin ou de la structure en cours de formation, la planche à aiguilles travaillant verticalement. En variante, toute autre orientation de la bande au niveau de son contact tangentiel avec le mandrin ou la structure peut être adoptée, par exemple une orientation verticale, la planche à aiguilles travaillant alors horizontalement.

Dans l'exemple illustré, la bande 20 est bobinée circonférentiellement en spires jointives et est aiguilletée au fur et à mesure de son bobinage. Il est nécessaire de lier entre elles les vitesses Va d'alimentation de la bande 20, Vr de rotation du mandrin 10, Vc de déplacement en translation du chariot 22 et la frequence d'aiguilletage N.

En fonction du pas d'aiguilletage désiré (distance que parcourt la bande 20 entre deux coups d'aiguilletage successifs), le rapport de proportionnalité entre la vitesse de rotation du moteur 32 de commande de frappe et la vitesse de rotation du rouleau 25a d'entraînement de la bande 20 est déterminé. Le rouleau 25a est alors entraîné à partir du moteur 32 par l'intermédiaire d'un variateur de vitesse (non représenté).

Il est par ailleurs nécessaire de maintenir la vitesse tangentielle du mandrin 10 ou de la structure en cours de formation, au niveau où la bande 20 vient au contact du mandrin ou d'une couche précédemment formée égale à la vitesse Va. A cet effet, on utilise un pantin 29 qui commande un potentiomètre rotatif 15 agissant à son tour sur l'alimentation du moteur 12 afin de régler la vitesse de rotation du mandrin. Le pantin 29 comprend un secteur denté 29a articulé au niveau de son sommet autour d'un axe 29b (fixé sur le chariot 22) et prolongé au-delà de son articulation par un bras 29c dont l'extrémité est reliée à l'axe du rouleau de tension 26. Le secteur denté 29a engrène avec une roue dentée 15a solidaire en rotation du potentiomètre 15. Ainsi, tout écart entre la vitesse tangentielle du mandrin et la vitesse d'alimentation se traduit par un déplacement vertical vers le haut ou vers le bas du rouleau de tension 26, donc par un déplacement en rotation du potentiomètre agissant sur l'alimentation du moteur 12 afin de ramener à zéro l'écart de vitesse détecté; la vitesse tangentielle du mandrin 10 est ainsi asservie à celle d'alimentation de la bande 20.

Enfin, le bobinage à spires jointives impose une relation entre la vitesse $V_c$ du chariot 22 et la vitesse de rotation $V_r$ du mandrin. A cet effet, une dynamo tachymétrique 16 est montée sur l'arbre du moteur 12 et délivre un signal qui commande l'alimentation du moteur à courant continu 23. Si l'on désigne par $b$ l'angle de bobinage de la bande 20 en pseudo-hélice sur le mandrin 10, on a la relation $V_c = V_r \cdot l/\cos b$. Lorsque la largeur $l$ de la bande 20 reste petite par rapport au rayon $r$ du tronc de cône ou se produit le bobinage, on a sensiblement $V_c = V_r \cdot l$.

Par contre, lorsque $l$ n'est pas négligeable devant $r$, le bobinage à spires jointives devient plus délicat malgré la capacité de déformation de la bande 20, et ce d'autant plus que le demi-angle au sommet $a$ est grand. Dans ce cas, l'angle $b$ peut varier de façon significative d'une extrémité à l'autre du mandrin puisque l'on a $\sin b = 1/2\,r$. Pour maintenir la planche à aiguilles 30 dans une direction perpendiculaire à la bande 20 en regard de celle-ci, il est alors nécessaire de monter la planche 30 de manière qu'elle puisse pivoter autour d'un axe vertical au fur et à mesure de son déplacement en translation. Ceci peut être obtenu en montant la planche 30 pivotante par rapport à son mécanisme d'entraînement vertical et en ajustant la position en rotation de la planche au moyen d'un gabarit s'étendant le long du trajet de celle-ci. Il est aussi nécessaire de faire varier la vitesse $V_c$ du chariot 22 en fonction des variations de l'angle $b$ le long du trajet rectiligne de ce chariot. Ceci peut être obtenu en affectant le signal de sortie de la dynamo tachymétrique 16 d'une grandeur variable en fonction de $b$.

On a envisagé ci-avant le cas d'un bobinage à spires jointives. Il est alors nécessaire de décaler les spires en direction axiale dans les couches successives afin d'éviter que des zones d'affaiblissement soient créées par une continuité en direction radiale des surfaces de séparation entre spires jointives.

En variante, il est possible d'éviter de créer de telles zones d'affaiblissement en réalisant un bobinage de chaque couche non pas par spires jointives mais avec un recouvrement partiel des spires voisines, par exemple jusqu'à sur la moitié de leur largeur. De préférence, un tel bobinage avec recouvrement est réalisé dans le cas où la bande utilisée a une épaisseur relativement faible. La vitesse du chariot 22 est toujours commandée en fonction de la vitesse de rotation du mandrin, par exemple en affectant le signal de sortie de la dynamo tachymétrique 16 d'un coefficient représentatif du taux de recouvrement souhaité.

Des butées réglables munies de micro-contacts 17, 18 sont disposées sur le bâti 13 pour commander l'inversion de marche du moteur 23 à la fin du bobinage de chaque couche. Simultanément, l'axe du mandrin est abaissé par rapport au bâti d'une distance égale à l'épaisseur d'une couche aiguilletée. A cet effet, l'axe 11 passe dans des paliers 11a, 11b qui sont montés sur des supports 19a, 19b mobiles verticalement par rapport au bâti 13 sous l'action de moteurs pas à pas 14 commandés en synchronisme par des signaux engendrés par la venue du chariot en contact avec les butées 17, 18. Dans l'exemple illustré, les supports 19a, 19b sont solidaires de chaînes sans fin engrenant sur des roues dentées mues par les moteurs 14; on peut aussi utiliser des vis sans fin. Le déplacement progressif du mandrin 10 par rapport au bâti 13 permet, d'une part, d'amener la bande 20 toujours tangentiellement à la surface de la structure en cours de formation et au niveau de la génératrice supérieure de celle-ci et, d'autre part, de conserver une profondeur d'aiguilletage constante.

Le fonctionnement de l'appareillage décrit ci-dessus découle à l'évidence de ce qui précède.

La bande 20 constituée de fibres peut se présenter sous différentes formes, telles que, par exemple:

- un complexe constitué d'un tissu (satin ou toile) sur lequel a été aiguilletée avec une faible densité d'aiguilletage (pré-aiguilletage, une nappe de fibres discontinues obtenues par cardage, ou une nappe de fibres continues obtenue par nappage de câbles ou fils;
- un complexe constitué d'un ruban tressé sur lequel a été pré-aiguilletée une nappe de fibres continues ou discontinues;
- un complexe tel que les deux ci-dessus dans lesquels le tissu ou la tresse est remplacé par un tricot;
- une nappe de fibres seules discontinues, obtenues par cardage et pré-aiguilletage, ou continues, obtenues par nappage de câbles ou de fils suivi d'un pré-aiguilletage;
- un tissu seul, constitué en chaîne et trame de fils formés de filaments continus ou discontinus; ou
- un tissu seul, constitué en chaîne de fils formés de filaments continus ou discontinus et en trame d'une mèche de filature.

Les fibres constituant les matériaux décrits ci-dessus peuvent être toutes fibres naturelles, artificielles ou synthétiques, organiques ou minérales, telles quelles ou traitées thermiquement. Le choix de la nature des fibres dépend de l'utilisation envisagée.

S'agissant de la réalisation de structures de renfort pour matériaux composites destinés à supporter des efforts thermomécaniques importants, les fibres les plus intéressantes sont les fibres de carbone, et les fibres céramiques (alumine, carbure de silicium, ...) ainsi que les fibres précurseurs de ces fibres ou toutes fibres constituant un intermédiaire entre fibres précurseurs et les fibres complètement traitées thermiquement. Lorsque la structure tridimensionnelle est réalisée à partir de fibres précurseurs ou intermédiaires, elle subit ultérieurement le traitement thermique destiné à conférer aux fibres les propriétés mécaniques optimales. Cette dernière façon de procéder permet de ne pas briser trop de fibres lors de l'aiguilletage dans le cas où les fibres traitées thermiquement ont des modules trop élevés et des résistances transversales trop faibles pour être aiguilletées sans dommage. Il peut enfin être procédé à l'aiguilletage d'un complexe de fibres combinant les stades primaire et final; par exemple un tissu de fibres de carbone haute résistance peut être aiguilleté avec une nappe de fibres de PAN (polyacrylonitryle, précurseur du carbone) stabilisé pour former un complexe dans lequel la bande 20 est découpée. On allie ainsi une meilleure caractéristique des fibres de carbone avec un aiguilletage non destructeur car les barbes des aiguilles, se couvrant de PAN stabilisé, ne blessent pas les fibres de carbone.

Au cours de la mise en oeuvre du procédé selon l'invention, l'aiguilletage se fait simultanément au bobinage. Les aiguilles 31 munies de barbes entraînent un certain nombre de fibres perpendiculairement au plan de la bande 20; ces fibres forment une liaison perpendiculaire aux couches bobinées sur le mandrin 10. Ainsi, une liaison dans une direction radiale est créée en plus des liaisons circonférentielles et axiales au niveau de la bande. L'aiguilletage assure donc à la fois la fixation de la bande au fur et à mesure de son alimentation en vue du bobinage désiré et la création de la liaison supplémentaire donnant le caractère tridimensionnel à la structure obtenue.

Comme on l'a évoqué plus haut, la réalisation d'un bobinage à spires successives dans le cas de structures non cylindriques nécessite l'utilisation d'une matière ayant une certaine capacité de déformation et se présentant sous forme d'une bande de largeur petite par rapport au rayon local de la structure en cours de formation où se produit le bobinage. Cette dernière condition ne doit pas conduire à l'utilisation de bandes de trop faible largeur dont le bobinage (notamment bord à bord pour des spires jointives) et l'aiguilletage seraient malaisés. En pratique, il est souhaitable que la largeur de la bande soit supérieure à 20 mm.

La constance de la vitesse d'alimentation de bande Va et de la fréquence d'aiguilletage N assure une constance de la densité surfacique d'aiguilletage, c'est-à-dire un nombre de coups d'aiguilles 31 constant par unité de surface. La constance de la profondeur d'aiguilletage, telle qu'elle résulte de l'abaissement progressif du mandrin 10 après le bobinage de chaque couche assure de plus la constance de la densité volumique d'aiguilletage, donc l'obtention d'une structure ayant des propriétés uniformes dans toute son épaisseur.

Pour obtenir une liaison efficace entre les couches, il est nécessaire que les aiguilles traversent non seulement la bande qui se présente, mais aussi au moins une partie substantielle de l'épaisseur de la couche sous-jacente. Aussi, de préférence, la profondeur d'aiguilletage est au moins égale au double de l'épaisseur d'une couche aiguilletée et peut atteindre plusieurs dizaines de fois cette épaisseur (par exemple jusqu'à 50 fois).

Afin de pouvoir aiguilleter les premières couches sur le mandrin, il est nécessaire de prévoir des moyens évitant que les aiguilles 31 viennent buter contre la surface dure du mandrin. L'aiguilletage sur table perforée ordinairement utilisé ne peut être appliqué dans le cas de mandrins tournants tronconiques ou, a fortiori, de mandrins ayant une forme non développable, telle que la forme "coquetier" (voir ci-après en référence à la figure 4).

Dans le cas de mandrins tronconiques (figure 3), ils sont recouverts d'une enveloppe 10a d'élastomère armé (par exemple de l'"Hypalon" armé d'un tissu de "Nylon"). Cette enveloppe est fixée par des agrafes aux deux extrémités du mandrin. Sur cette enveloppe est collée une deuxième enveloppe (10b) formée d'un feutre d'embase d'épaisseur suffisante pour que les aiguilles, lors de la première passe d'aiguilletage puissent pénétrer sur la profondeur d'aiguilletage prévue, sans toucher le mandrin. Sur le feutre d'embase, est collée une autre enveloppe (10c) constituée d'une mince feuille, par exemple en polychlorure de vinyle. Au cours de l'aiguilletage, la feuille 10c est traversée par les aiguilles mais évite que trop de fibres provenant du matériau de la bande 20 ne s'incrustent dans le feutre de polypropylène. A la fin de l'aiguilletage, l'enveloppe d'élastomère est dégrafée et le mandrin est ôté. Le feutre 10b est séparé par pelage de la structure réalisée, cette opération de pelage étant rendue aisée par la présence de la feuille 10c.

Dans le cas où le mandrin et la structure à réaliser ont une surface extérieure non développable, la première enveloppe est par exemple une gaine de polyéthylène thermorétractable qui est mise en place sur le mandrin par thermorétractation et agrafée aux deux extrémités du mandrin. Des bandes adhésives double face ou des bandes à accrochage mécanique sont collées sur l'enveloppe en polyéthylène suivant des génératrices du mandrin afin de maintenir sur celui-ci un feutre d'embase formé par un bobinage hélicoïdal à spires jointives de bandes de feutre de polypropylène. Le feutre d'embase peut être recouvert d'une enveloppe mince formée par bobinage et collage d'une bande de polychlorure de vinyle.

La figure 4 illustre une variante de réalisation de l'appareillage des figures 1 et 3 dans le cas où la structure à fabriquer a une forme "coquetier", notamment dans le but de réaliser des divergents de tuyère.

Le mandrin 10' a un profil correspondant à celui de la structure à fabriquer. Le chariot portant le dispositif d'alimentation de bande 20' et la planche à aiguilles 30' est déplacé le long d'un guide 24' qui s'étend parallèlement à la génératrice supérieure du mandrin 10' (ou de la structure en formation), le mandrin pouvant être d'axe horizontal.

L'aiguilletage doit être réalisé perpendiculairement à la surface à aiguilleter tout le long du mandrin 10'. Aussi, la planche à aiguilles 30' est mobile en rotation autour d'un axe perpendiculaire au plan méridien contenant la génératrice le long de laquelle l'aiguilletage est réalisé, c'est-à-dire, ici, un axe horizontal perpendiculaire à l'axe du mandrin, afin de rester parallèle au plan tangent à la surface à aiguilleter. La position de la planche 30' est réglée par un palpeur 34', par exemple un galet, assujetti à suivre un gabarit 35' et monté à l'extrémité d'un bras relié à la planche 30' en un point éloigné de l'axe de pivotement de celui-ci.

En variante, l'orientation de la planche à aiguilles pourrait être commandée par un organe moteur recevant des signaux élaborés par un dispositif de calcul en fonction du profil de la structure à fabriquer.

Toujours en variante, le maintien du parallélisme entre la planche 30' portant les aiguilles et la surface à aiguilleter peut être obtenu en commandant un déplacement avec pivotement de l'axe du mandrin dans un plan vertical.

On notera enfin qu'il est possible, au cours du processus de fabrication, d'insérer entre deux couches de la structure des éléments de renforts disposés de manière à croiser les spires formées par le bobinage de la bande, par exemple dans une direction parallèle aux génératrices de la structure. Ces éléments de renfort sont en matériau fibreux, par exemple sous forme de mèches de filature, câbles, fils, tissus ou tresses, les fibres constitutives étant semblables à celles de la bande utilisée pour le bobinage, c'est-à-dire notamment des fibres de carbone, des fibres céramiques, ou des précurseurs à un stade plus ou moins élaboré de ces fibres.

## Revendications

1. Procédé de fabrication de structure tridimensionnelle de révolution par bobinage d'une bande de matériau fibreux sur un mandrin rotatif de longueur au moins égale à celle de la structure, de manière à former des couches superposées de matériau fibreux, et par aiguilletage des couches de matériau fibreux entre elles, au cours du bobinage, procédé caractérisé en ce que, pour fabriquer une structure non cylindrique, il comprend les étapes qui consistent à:

- amener sur un mandrin rotatif non cylindrique, ayant le profil de la structure à fabriquer, une bande de matériau fibreux dont la largeur est plusieurs fois inférieure à la longueur d'une génératrice de la structure à fabriquer,
- bobiner la bande sur le mandrin pour former des couches superposées chacune constituée par des spires successives de la bande de matériau fibreux, et
- au cours du bobinage, lier successivement les couches entre elles par un aiguilletage réalisé à l'emplacement où la bande vient se superposer au mandrin ou à la couche précédémment formée, ledit aiguilletage étant réalisé sur toute la largeur de la bande au moyen d'un ensemble d'aiguilles qui est déplacé longitudinalement par rapport au mandrin à une vitesse fonction de la vitesse de rotation du mandrin.

2. Procédé selon la revendication 1, caractérisé en ce que la profondeur d'aiguilletage est constante.

3. Procédé selon la revendication 2, caractérisé en ce que, après bobinage de chaque couche, la distance entre l'ensemble d'aiguilles et la structure en cours de formation est augmentée d'une quantité égale à l'épaisseur d'une couche aiguilletée.

4. Procédé selon l'une quelconque des revendications 1 et 3, caractérisé en ce que la densité surfacique d'aiguilletage est constante.

5. Procédé selon l'une quelconque des revendications 1 à 4, caractérisé en ce que l'ensemble d'aiguilles est déplacé longitudinalement par rapport au mandrin le long d'une ligne reproduisant une génératrice de la surface du mandrin ou de la structure en cours de fabrication.

6. Procédé selon l'une quelconque des revendications 1 à 4, caractérisé en ce que chaque couche est formée par le bobinage à spires jointives de la bande de matériau fibreux.

7. Procédé selon l'une quelconque des revendications 1 à 6, caractérisé en ce que l'on insère entre deux couches de la structure des éléments de renfort en matériau fibreux disposés de manière à croiser les spires formées par le bobinage de la bande.

8. Procédé selon l'une quelconque des revendications 1 à 7, caractérisé en ce qu'avant le bobinage de la bande, on forme sur le mandrin une couche d'embase destinée à permettre la pénétration des aiguilles sans les endommager lors de l'aiguilletage de la ou des premières couches de la structure.

9. Appareillage pour la fabrication d'une structure tridimensionnelle de révolution par bobinage d'une bande de matériau fibreux sur un mandrin rotatif de longueur au moins égale à celle de la structure, de manière à former des couches superposées de matériau fibreux, et par aiguilletage des couches de matériau fibreux entre elles, au cours du bobinage, ledit aiguilletage étant réalisé au moyen d'un ensemble d'aiguilles (30) s'étendant sur une longueur égale à la largeur de la bande (20) et monté de manière que les aiguilles puissent pénétrer sensiblement perpendiculairement à la bande à l'emplacement où celle-ci vient se superposer au mandrin ou à la couche précédémment formée, appareillage caractérisé en ce que, pour fabriquer une structure non cylindrique, il comporte:

- un mandrin rotatif non cylindrique (10) ayant le profil de la structure à fabriquer,
- un dispositif d'alimentation (21) destiné à amener sur le mandrin rotatif (10) une bande (20) de matériau fibreux dont la largeur est plusieurs fois inférieure à la longueur d'une génératrice de la structure à fabriquer, de manière à former sur le mandrin des couches superposées chacune constituée par des spires successives de la bande de matériau fibreux, et
- un dispositif (22, 23) pour déplacer l'ensemble d'aiguilles longitudinalement par rapport au mandrin à une vitesse fonction de la vitesse de rotation du mandrin.

10. Appareillage selon la revendication 9, caractérisé en ce que des moyens (19a, 19b, sont prévus pour écarter l'un de l'autre l'ensemble (30) des aiguilles et le mandrin (10) d'une distance égale à l'épaisseur d'une couche aiguilletée après la formation de chaque couche.

11. Appareillage selon l'une quelconque des revendications 9 et 10, caractérisé en ce que le dispositif (21) d'alimentation de bande comprend un organe (23) d'entraînement de la bande (20) à vitesse constante et en ce qu'un dispositif d'asservissement (29, 15) est prévu pour commander la vitesse de rotation du mandrin (10) de sorte que la vitesse tangentielle de celui-ci ou de la structure en cours de formation, au niveau où la bande se superpose au mandrin ou à une couche précédemment formée, soit égale à la vitesse d'alimentation de la bande (20).

12. Appareillage selon l'une quelconque des revendications 9 à 11, caractérisé en ce que l'ensemble (30) des aiguilles est monté sur un chariot (22) qui est mobile longitudinalement le long d'une ligne reproduisant une génératrice du mandrin (10), et qui est couplé à un moteur (23) commandé en fonction de la vitesse de rotation du mandrin (10).

13. Appareillage selon la revendication 12, caractérisé en ce que les aiguilles sont montées sur un support (30) pouvant pivoter autour d'un axe perpendiculaire au plan méridien contenant ladite ligne le long de laquelle l'aiguilletage est réalisé.

**Claims**

1. Process for manufacturing a three-dimensional structure of revolution by winding a tape of fibrous material over a rotary mandrel, whose length is at least equal to that of the structure, in order to form superposed layers of fibrous material, and by needling layers of fibrous material together during winding,

process characterized in that, in order to manufacture a non-cylindrical structure, it comprises the steps, which consist in:

- delivering onto a non-cylindrical rotating mandrel having a profile corresponding to that of the structure to be manufactured, a tape of a fibrous material, having a width that is several times less than the length of a generatrix of said structure to be manufactured,
- winding the tape over the mandrel to form superposed layers, each being constituted by successive turns of the tape of the fibrous material, and,
- during winding, successively bonding the layers together by needling, said needling being effected at the place where the tape, is superposed on the mandrel or on the previously formed layer, said needling being effected over the whole length of the tape by means of an assembly of needles which is displaced longitudinally with respect to the mandrel at a speed which is a function of the speed of rotation of the mandrel.

2. Process according to claim 1, characterized in that the depth of needling is constant.

3. Process according to claim 2, characterized in that, at the end of the winding of each layer, the distance between the assembly of needles and the structure under formation is increased by a quantity equal to the thickness of a needled layer.

4. Process according to any one of claims 1 and 3, characterized in that the surface density of needling is constant.

5. Process according to any one of claims 1 to 4, characterized in that the assembly of needles is displaced longitudinally with respect to the mandrel along a line reproducing a generatrix of the surface of the mandrel or of the structure during manufacture.

6. Process according to any one of claims 1 to 4, characterized in that each layer is formed by winding the tape of fibrous material in continuous turns.

7. Process according to any one of claims 1 to 6, characterized in that reinforcing elements of fibrous material are introduced between adjacent layers of the structure so as to cross the turns formed by winding the tape.

8. Process according to any one of claims 1 to 7, characterized in that a base layer is disposed on the mandrel before winding on the tape so as to allow penetration of the needles without damaging them during needling of the initial layer or layers of the structure.

9. Apparatus for manufacturing a three-dimensional structure of revolution by winding a tape of fibrous material over a rotating mandrel having a length at least equal to that of the structure, so as to form superposed layers of fibrous material, and by needling layers of fibrous material together during winding, said needling being performed by means of an assembly of needles (30) extending over a length equal to the width of the tape (20) and mounted so that the needles may penetrate substantially perpendicularly to the tape where the latter is superposed on the mandrel or on the previously formed layer, apparatus characterized in that, in order to manufacture a non-cylindrical structure, it comprises:
- a non-cylindrical rotating mandrel (10) having the profile of the structure to manufacture,
- a supply device (21) for bringing onto the rotating mandrel (10) a tape (20) of fibrous material whose width is several times less than the length of a generatrix of said structure to manufacture, so as to form on the mandrel superposed layers each constituted by successive turns of the tape of fibrous material, and
- a device (22, 33) for displacing the assembly of needles longitudinally with respect to the mandrel at a speed which is a function of the speed of rotation of the mandrel.

10. Apparatus according to claim 9, characterized in that means (19a, 19b) are provided for moving apart said mandrel (10) and said assembly (30) of needles by a distance equal to the thickness of a needled layer after the formation of each layer.

11. Apparatus according to any one of claims 9 and 10, characterized in that the tape-supplying device (21) comprises a member (23) for driving the tape (20) at constant speed and in that a control device (29, 15) is provided for controlling the rotation speed of the mandrel (10) so that the tangential speed thereof and of the structure being formed, at the level where the tape is superposed on the mandrel or on a previously formed layer, is equal to the speed of supply of the tape (20).

12. Apparatus according to anyone of claims 9 to 11, characterized ist that the assembly (30) of needles is mounted on a carriage (22) which is movable longitudinally along a line reproducing a generatrix of the mandrel (10), which is coupled to a motor (23) controlled as a function of the rotation speed of the mandrel (10).

13. Apparatus according to claim 12, characterized in that the needles are mounted on a support means (30) adapted to pivot about an axis perpendicular to the meridian plane containing said line along which said needling is performed.

**Patentansprüche**

1. Verfahren zur Herstellung einer dreidimensionalen Rotationsstruktur durch Aufspulen eines Bandes aus faserigem Material auf einer drehenden Wickelhülse mit einer Länge wenigstens gleich derjenigen der Struktur derart, daß übereinanderliegende Lagen aus faserigem Material gebildet werden, und durch Nadeln der Lagen aus faserigem Material untereinander im Verlauf des Aufspulens,
wobei das Verfahren dadurch gekennzeichnet ist, daß es zum Herstellen einer nichtzylindrischen Struktur Schritte umfaßt, die darin bestehen, daß:

- auf eine nicht zylindrische, drehende Wickelhülse, die das Profil der herzustellenden Struktur aufweist, ein Band aus faserigem Material zugeführt wird, dessen Breite mehrere Male kleiner als die Länge einer Mantellinie der herzustellenden Struktur ist,
- das Band auf die Wickelhülse aufgespult wird, um übereinanderliegende Lagen zu bilden, die jeweils durch aufeinanderfolgende Windungen des Bandes aus faserigem Material gebildet sind, und
- im Verlauf des Aufspulens aufeinanderfolgend die Lagen untereinander durch eine Vernadelung verbunden werden, die an der Stelle ausgeführt wird, wo das Band an der Wickelhülse oder an der zuvor gebildeten Lage zum übereinanderliegen gelangt, wobei die Vernadelung über die gesamte Länge des Bandes mittels eines Satzes von Nadeln ausgeführt wird, der in Längsrichtung im bezug auf die Wickelhülse mit einer Geschwindigkeit verstellt wird, der eine Funktion der Drehgeschwindigkeit der Wickelhülse ist.

2. Verfahren nach Anspruch 1, dadurch gekennzeichnet, daß die Vernadelungstiefe konstant ist.

3. Verfahren nach Anspruch 2, dadurch gekennzeichnet, daß nach Aufspulen einer jeden Lage der Abstand zwischen dem Satz von Nadeln und der Struktur im Bildungsverlauf um eine Größe gleich der Dicke einer genadelten Lage vergrößert wird.

4. Verfahren nach einem beliebigen der Ansprüche 1 und 3, dadurch gekennzeichnet, daß die Oberflächenvernadelungsdichte konstant ist.

5. Verfahren nach einem beliebigen der Ansprüche 1 bis 4, dadurch gekennzeichnet, daß der Satz von Nadeln in Längsrichtung in bezug auf die Wickelhülse längs einer Linie verstellt wird, die eine Mantellinie der Oberfläche der Wickelhülse oder der Struktur im Herstellungsverlauf wiedergibt.

6. Verfahren nach einem beliebigen der Ansprüche 1 bis 4, dadurch gekennzeichnet, daß jede Lage durch das Aufspulen mit nebeneinanderliegenden Windungen des Bandes aus faserigem Material gebildet wird.

7. Verfahren nach einem beliebigen der Ansprüche 1 bis 6, dadurch gekennzeichnet, daß zwischen zwei Lagen der Struktur Verstärkungselemente aus faserigem Material eingefügt werden, die so angeordnet sind, daß sie die durch Aufspulen des Bandes gebildeten Windungen kreuzen.

8. Verfahren nach einem beliebigen der Ansprüche 1 bis 7, dadurch gekennzeichnet, daß vor dem Aufspulen des Bandes auf der Wickelhülse eine Grundlage gebildet wird, die dazu bestimmt ist, das Eindringen der Nadeln bei dem Nadeln der ersten Lage(n) der Struktur zu gestatten, ohne diese zu beschädigen.

9. Vorrichtung zur Herstellung einer dreidimensionalen Rotationsstruktur durch Aufspulen eines Bandes aus faserigem Material auf einer drehenden Wickelhülse mit einer Länge wenigstens gleich derjenigen der Struktur derart, daß übereinanderliegende Lagen aus faserigem Material gebildet werden, und durch Nadeln der Lagen aus faserigem Material untereinander im Verlauf des Aufspulens, wobei die Vernadelung mittels eines Satzes von Nadeln (30) ausgeführt wird, der sich über eine Länge gleich der Breite des Bandes (20) erstreckt und derart angebracht ist, daß die Nadeln im wesentlichen senkrecht zum Band an der Stelle eindringen können, wo dieses zum Übereinanderliegen auf der Wickelhülse oder der zuvor gebildeten Lage gelangt, wobei die Vorrichtung dadurch gekennzeichnet ist, daß sie zur Herstellung einer nichtzylindrischen Struktur umfaßt:

- eine nichtzylindrische, drehende Wickelhülse (10), der das Profil der herzustellenden Struktur aufweist,

- eine Zufuhrvorrichtung (21), die dazu bestimmt ist, auf die drehende Wickelhülse (10) ein Band (20) aus faserigem Material zuzuführen, dessen Breite mehrere Male kleiner als die Länge einer Mantellinie der herzustellenden Struktur ist, derart, daß auf der Wickelhülse übereinanderliegende Lagen gebildet werden, die jeweils durch aufeinanderfolgende Windungen des Bandes aus faserigem Material gebildet sind, und

- eine Vorrichtung (22, 23) zum Verstellen des Satzes von Nadeln in Längsrichtung in bezug auf die Wickelhülse mit einer Geschwindigkeit, die eine Funktion der Drehgeschwindigkeit der Wickelhülse ist.

10. Vorrichtung nach Anspruch 9, dadurch gekennzeichnet, daß Mittel (19a, 19b) vorgesehen sind, um den Satz (30) der Nadeln und die Wickelhülse (10) voneinander um einen Abstand gleich der Dicke einer genadelten Lage nach Bildung jeder Lage zu entfernen.

11. Vorrichtung nach einem beliebigen der Ansprüche 9 und 10, dadurch gekennzeichnet, daß die Bandzuführungsvorrichtung (21) ein Mittel (23) zum Mitnehmen des Bandes (20) mit konstanter Geschwindigkeit aufweist und daß eine Steuerungsvorrichtung (29, 15) vorgesehen ist, um die Drehgeschwindigkeit der Wickelhülse (10) derart zu steuern, daß die Tangentialgeschwindigkeit von diesem oder von der Struktur im Bildungsverlauf in der Höhe, wo das Band sich der Wickelhülse oder einer zuvor gebildeten Lage überlagert, gleich der Zuführungsgeschwindigkeit des Bandes (20) ist.

12. Vorrichtung nach einem beliebigen der Ansprüche 9 bis 11, dadurch gekennzeichnet, daß der Satz (30) der Nadeln auf einem Schlitten (22) angebracht ist, der in Längsrichtung längs einer eine Mantellinie der Wickelhülse (10) wiedergebenden Linie beweglich ist und der mit einem in Abhängigkeit von der Drehgeschwindigkeit der Wickelhülse (10) gesteuerten Motor gekoppelt ist.

13. Vorrichtung nach Anspruch 12, dadurch gekennzeichnet, daß die Nadeln auf einem Träger (30) angebracht sind, der sich um eine Achse senkrecht zur Meridianebene verschwenken kann, die die Linie enthält, längs der die Vernadelung ausgeführt wird.

Fig.1

Fig-2

Fig-3

Fig-4